# EUROPÄISCHE PATENTSCHRIFT

(11) **EP 3 627 002 B1**
(45) Veröffentlichungstag und Bekanntmachung des Hinweises auf die Patenterteilung: **30.06.2021**
(21) Anmeldenummer: 18195645.9
(22) Anmeldetag: 20.09.2018
(51) Int. Cl.: F16H 57/032, F16H 57/04

(54) **GETRIEBE UND VERFAHREN ZUR HERSTELLUNG EINES SOLCHEN GETRIEBES**
TRANSMISSION AND METHOD FOR MANUFACTURING SUCH A TRANSMISSION
BOÎTE DE VITESSE ET PROCÉDÉ DE FABRICATION D'UNE TELLE BOÎTE DE VITESSE

(43) Veröffentlichungstag der Anmeldung: 25.03.2020
(73) Patentinhaber: Flender GmbH, 46395 Bocholt (DE)
(72) Erfinder: Papies, Jennifer, 44797 Bochum (DE)
(74) Vertreter: Michalski Hüttermann & Partner Patentanwälte mbB

(56) Entgegenhaltungen:
- DE-A1- 10 034 301
- DE-A1-102010 007 413

## Beschreibung

Die Erfindung betrifft ein Getriebe mit einem Gehäuse aus einem metallischen Werkstoff, das mit Kühlstrukturen versehen ist. Ferner betrifft die Erfindung ein Verfahren zur Herstellung eines solchen Getriebes.

Auf dem Gebiet der Getriebetechnik ist es von wesentlicher Bedeutung, die innerhalb des Getriebes anfallende Wärme aus dem Getriebegehäuse abzuführen, um einen einwandfreien Betrieb des Getriebes dauerhaft gewährleisten zu können. Zu diesem Zweck kann das Getriebe mit einer aktiven Kühleinrichtung versehen werden. Alternativ oder zusätzlich kann eine passive Kühlung vorgesehen sein, die beispielsweise realisiert wird, indem die Gehäuseoberfläche durch das Vorsehen von Kühlstrukturen in Form von Kühlrippen vergrößert wird. Gehäuse mit solchen Kühlrippen sind im Vergleich zu entsprechend ausgeführten Gehäusen ohne Kühlrippen allerdings um ein Vielfaches teurer. Zudem geht die Ausbildung von Kühlrippen mit einer vergleichsweise großen Erhöhung des Eigengewichts des Gehäuses einher, was in vielen Fällen nicht wünschenswert ist.

Aus der DE 10 2010 007413 A1 ist bereits ein gattungsgemäßes Getriebe bekannt.

Ausgehend von diesem Stand der Technik ist es eine Aufgabe der vorliegenden Erfindung, ein Getriebe der eingangs genannten Art zu schaffen, das sich einfach und preiswert herstellen lässt und dessen Kühlleistung sich flexibel an den jeweiligen Bedarf anpassen lässt.

Zur Lösung dieser Aufgabe schafft die vorliegende Erfindung ein Getriebe der eingangs genannten Art, wobei die Kühlstrukturen Kühlelemente aus offenporigem Metallschaum aufweisen, die an dem Gehäuse befestigt sind, insbesondere an einer Gehäuseaußenfläche. Ein wesentlicher Vorteil solcher Kühlelemente aus offenporigem Metallschaum gegenüber den klassischen Kühlrippen ist die um ein Vielfaches vergrößerte Oberfläche und die damit einhergehende verbesserte Kühlleistung. Darüber hinaus weisen solche Kühlelemente aus offenporigem Metallschaum im Vergleich zu Kühlrippen ein geringes Eigengewicht auf, weshalb ein erfindungsgemäßes Gehäuse gegenüber einem mit Kühlrippen versehenen Gehäuse bei vergleichbarer Kühlleistung leichter ausgebildet werden kann. Noch ein weiterer Vorteil, der mit der Verwendung separater Kühlelemente aus offenporigem Metallschaum einhergeht, besteht darin, dass sich die Kühlelemente nachträglich an einem beispielsweise gießtechnisch gefertigten Gehäuse bedarfsgerecht befestigen lassen, was eine einfache, flexible und bedarfsgerechte Einstellung der Kühlleistung ermöglicht. Insbesondere lassen sich dank einer solchen nachträglichen Montage der Kühlelemente ausgehend von einem Einheitsgehäuse unterschiedlichste Kühlleistungen realisieren, was eine kostengünstige Serienfertigung ermöglicht, wenn an und für sich gleich identisch ausgebildete Gehäuse mit unterschiedlicher Kühlleistung benötigt werden.

Gemäß einer Ausgestaltung der vorliegenden Erfindung sind die Kühlelemente aus Aluminium oder Kupfer hergestellt. Ein wesentlicher Vorteil von Aluminium und Kupfer besteht hinsichtlich der guten Wärmeleitfähigkeit, von Aluminium zusätzlich hinsichtlich des niedrigen Gewichts.

Bevorzugt sind die Kühlelemente plattenförmig ausgebildet, was eine einfache und flexible Handhabung ermöglicht, wobei die Form der Unterseite an die Form eines Bereiches der Außenfläche des Gehäuses angepasst sein kann. So können die Kühlelemente eine kreisringsegmentförmige Unterseite aufweisen, um diese einfach an Gehäusen befestigen zu können, deren Außenfläche zumindest bereichsweise ebenfalls kreisringsegmentförmig ausgebildet ist, um nur ein Beispiel zu nennen. Zwischen den Kühlelementen und dem Gehäuse ist gemäß der vorliegenden Erfindung eine Silikon und thermisch leitende Partikel aufweisende Zwischenschicht vorgesehen. Dies ist insbesondere dann von Vorteil, wenn die Oberfläche des Gehäuses, an der die Kühlelemente angeordnet werden sollen, uneben ist, wie es beispielsweise bei gießtechnisch hergestellten Gehäusen häufig der Fall ist.

Bevorzugt sind die Kühlelemente mittels Schrauben und/oder Kleben an dem Gehäuse befestigt. Dies ermöglicht eine sehr einfache Montage der Kühlelemente an dem Gehäuse.

Alternativ oder zusätzlich können die Kühlelemente über Magneten an diesem befestigt sein.

Ferner schafft die vorliegende Erfindung zur Lösung der eingangs genannten Aufgabe ein Verfahren zur Herstellung eines erfindungsgemäßen Getriebes, das dadurch gekennzeichnet ist, dass Kühlelemente aus offenporigem Metallschaum an dem Gehäuse befestigt werden.

Nach der Erfindung wird zwischen den Kühlelementen und dem Gehäuse eine Silikon und thermisch leitende Partikel aufweisende Zwischenschicht vorgesehen, um insbesondere Unebenheiten der Gehäuseoberfläche ausgleichen zu können.

Bevorzugt werden die Kühlelemente mittels Schrauben und/oder Kleben und/oder magnetisch an dem Gehäuse befestigt.

Weitere Vorteile der vorliegenden Erfindung werden anhand der nachfolgenden Beschreibung eines Gehäuses gemäß einer Ausführungsform der vorliegenden Erfindung unter Bezugnahme auf die beiliegende Zeichnung deutlich. Darin ist
Figur 1 eine schematische Ansicht eines Getriebes gemäß einer Ausführungsform der vorliegenden Erfindung mit daran angeordneten Kühlelementen und

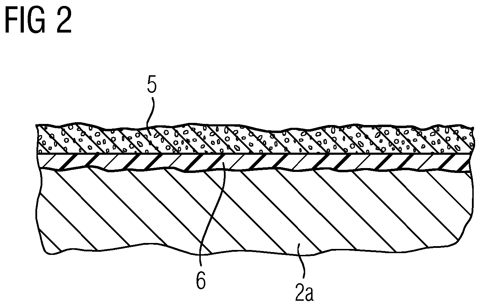

Figur 2 eine vergrößerte Schnittansicht entlang der Linie II-II in Figur 1.

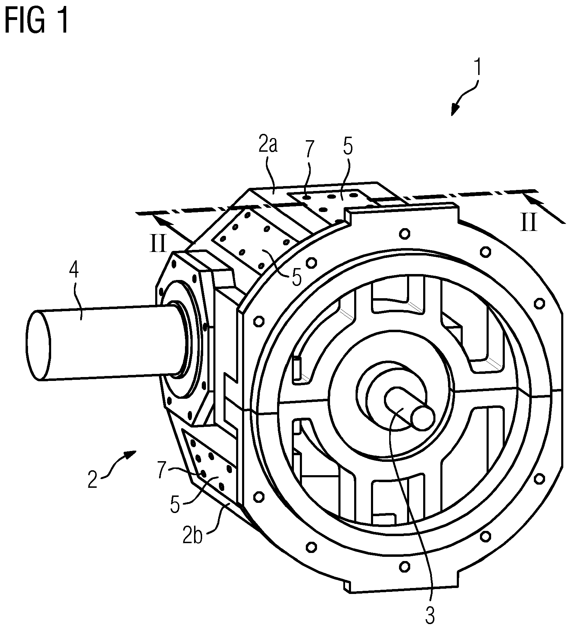

Figur 1 zeigt ein Getriebe 1 gemäß einer Ausführungsform der vorliegenden Erfindung, bei dem es sich vorliegend um ein als Kegelstirnradgetriebe ausgebildetes Stirnradgetriebe handelt. Es sollte allerdings klar sein, dass die konkrete Getriebeart für die vorliegende Erfindung keine Rolle spielt. Das Getriebe 1 weist ein Gehäuse 2 auf, das in ein Gehäuseoberteil 2a und in ein Gehäuseunterteil 2b unterteilt ist. Das Gehäuseoberteil 2a und das Gehäuseunterteil 2b sind vorliegend symmetrisch aufgebaut und können in der gleichen Modellform abgegossen werden, wobei dies nicht obligatorisch ist. Das Getriebe 1 umfasst ferner eine Antriebswelle 3, über welche die Antriebsleistung in das Getriebe 1 gelangt, und eine Abtriebswelle 4, die mit einer nicht dargestellten Anlage verbunden werden kann, wie beispielsweise mit einer Förderbandanlage, um nur ein Beispiel zu nennen. An der Außenseite des Gehäuses 2 sind Kühlstrukturen in Form von Kühlelementen 5 aus offenporigem Metallschaum angeordnet, die als separate Bauteile an dem Gehäuse 1 befestigt sind. Die Kühlelemente 5 sind vorliegend plattenförmig ausgebildet und aus Aluminium gefertigt. Zwischen den Kühlelementen 5 und dem Gehäuse 2 ist jeweils eine Silikon und thermisch leitende Partikel aufweisende Zwischenschicht 6 vorgesehen, die allgemein auch unter der Bezeichnung "gap filler" bekannt ist. Die Kühlelemente 5 sind vorliegend unter Verwendung von Schrauben 7 an dem Gehäuse 2 befestigt. Alternativ oder zusätzlich kann die Befestigung aber auch durch Kleben und/oder unter Einsatz von Magneten erfolgen. Im letzteren Fall sind die Kühlelemente 5 mit entsprechenden, vorliegend nicht dargestellten Magneten zu versehen.

Zur Herstellung des in Figur 1 dargestellten Gehäuses 1 wird in einem ersten Schritt das Getriebe 1 in bekannter Weise montiert. In einem weiteren Schritt werden dann die separaten Kühlelemente 5 an der Gehäuseaußenfläche des Gehäuses 2 positioniert und befestigt. Die Anzahl und die Position der einzelnen Kühlelemente 5 kann dabei je nach gewünschter Kühlleistung gewählt werden. Um trotz der unebenen Außenfläche des gießtechnisch hergestellten Gehäuses 2 eine gute thermische Anbindung der Kühlelemente 5 an das Gehäuse 2 zu gewährleisten, wird zwischen den Kühlelementen 5 und dem Gehäuse 2 jeweils eine Zwischenschicht 6 positioniert, welche die Unebenheiten der Gehäuseaußenfläche ausgleicht.

Ein wesentlicher Vorteil des erfindungsgemäßen Getriebes 1 gegenüber herkömmlichen, mit Kühlrippen versehenen Getrieben gleicher Bauart besteht darin, dass das erfindungsgemäße Getriebe 1 dank der Verwendung von Kühlstrukturen in Form der Kühlelemente 5 ein geringeres Eigengewicht aufweist. Darüber hinaus ist die gießtechnische Herstellung des Gehäuses 2 bzw. seines Gehäuseober- und unterteils aufgrund der nicht vorhandenen Kühlrippen wesentlich preiswerter. Noch ein weiterer Vorteil besteht darin, dass sich die Kühlleistung des Getriebes 1, die über die Kühlstrukturen in Form der Kühlelemente 5 bereitgestellt wird, flexibel und damit bedarfsgerecht durch geeignete Wahl der Form, Anzahl und Position der Kühlelemente 5 einstellen lässt. Somit ist es auch möglich, Getriebe gleicher Bauart mit unterschiedlichen Kühlleistungen unter Verwendung baugleicher Gehäuse 2 bereitzustellen, was die Serienfertigung stark erleichtert.

Obwohl die Erfindung im Detail durch das bevorzugte Ausführungsbeispiel näher illustriert und beschrieben wurde, so ist die Erfindung nicht durch die offenbarten Beispiele eingeschränkt, sondern sie wird in den Ansprüchen definiert. Die Kühlelemente 5 können eine von einer Plattenform abweichende Gestalt aufweisen. Auch kann die Unterseite der Kühlelemente 5 an die Form der Gehäuseaußenfläche angepasst sein.

## Patentansprüche

1. Getriebe (1) mit einem Gehäuse (2) aus einem metallischen Werkstoff, das mit Kühlstrukturen versehen ist, wobei die Kühlstrukturen Kühlelemente (5) aus offenporigem Metallschaum aufweisen, die an dem Gehäuse (2) befestigt sind, insbesondere an einer Gehäuseaußenfläche,
**dadurch gekennzeichnet, dass**
zwischen den Kühlelementen (5) und dem Gehäuse (2) eine Silikon und thermisch leitende Partikel aufweisende Zwischenschicht (6) vorgesehen ist.

2. Getriebe (1) nach Anspruch 1, **dadurch gekennzeichnet, dass** die Kühlelemente (5) aus Aluminium oder Kupfer hergestellt sind.

3. Getriebe (1) nach Anspruch 1 oder 2, **dadurch gekennzeichnet, dass** die Kühlelemente (5) plattenförmig ausgebildet sind.

4. Getriebe (1) nach einem der vorhergehenden Ansprüche, **dadurch gekennzeichnet, dass** die Kühlelemente (5) mittels Schrauben (7) und/oder Kleben an dem Gehäuse (2) befestigt sind.

5. Getriebe (1) nach einem der vorhergehenden Ansprüche, **dadurch gekennzeichnet, dass** die Kühlelemente (5) über Magneten an diesem befestigt sind.

6. Verfahren zur Herstellung eines Getriebes (1) nach einem der vorherigen Ansprüche, wobei Kühlelemente (5) aus offenporigem Metallschaum an dem Gehäuse (2) befestigt werden,
**dadurch gekennzeichnet, dass**
zwischen den Kühlelementen (5) und dem Gehäuse (2) eine Silikon und thermisch leitende Partikel aufweisende Zwischenschicht (6) vorgesehen wird.

7. Verfahren nach Anspruch 6, **dadurch gekennzeichnet, dass** die Kühlelemente (5) mittels Schrauben (7) und/oder Kleben und/oder magnetisch an dem Gehäuse (2) befestigt werden.

## Claims

1. Transmission (1) having a housing (2) made from a metallic material, which is provided with cooling structures, wherein the cooling structures have cooling elements (5) made from open-cell metal foam, which are secured on the housing (2), in particular on a housing outer surface,
**characterized in that**
an intermediate layer (6) containing silicone and thermally conductive particles is provided between the cooling elements (5) and the housing (2).

2. Transmission (1) according to Claim 1, **characterized in that** the cooling elements (5) are produced from aluminium or copper.

3. Transmission (1) according to Claim 1 or 2, **characterized in that** the cooling elements (5) are of plate-shaped design.

4. Transmission (1) according to any one of the preceding claims, **characterized in that** the cooling elements (5) are secured on the housing (2) by means of screws (7) and/or adhesive bonding.

5. Transmission (1) according to any one of the preceding claims, **characterized in that** the cooling elements (5) are secured thereon by means of magnets.

6. Method for producing a transmission (1) according to any one of the preceding claims, wherein cooling elements (5) made from open-cell metal foam are secured on the housing (2),
**characterized in that**
an intermediate layer (6) containing silicone and thermally conductive particles is provided between the cooling elements (5) and the housing (2).

7. Method according to Claim 6, **characterized in that** the cooling elements (5) are secured on the housing (2) by means of screws (7) and/or adhesive bonding and/or magnetically.

## Revendications

1. Transmission (1) comprenant un carter (2) en un matériau métallique, qui est pourvu de structures de refroidissement, les structures de refroidissement ayant des éléments (5) de refroidissement en mousse métallique à pore ouvert, qui sont fixés au carter (2), notamment à une surface extérieure du carter,
**caractérisé en ce que**
une couche (6) intermédiaire, ayant une silicone et des particules conductrices thermiquement, est prévue entre les éléments (5) de refroidissement et le carter.

2. Transmission (1) suivant la revendication 1, **caractérisée en ce que** les éléments (5) de refroidissement sont en aluminium ou en cuivre.

3. Transmission (1) suivant la revendication 1 ou 2, **caractérisée en ce que** les éléments (5) de refroidissement sont en forme de plaque.

4. Transmission (1) suivant l'une des revendications précédentes, **caractérisée en ce que** les éléments (5) de refroidissement sont fixés au carter (2) au moyen de vis (7) et/ou de colles.

5. Transmission (1) suivant l'une des revendications précédentes, **caractérisée en ce que** les éléments (5) de refroidissement sont fixés à celle-ci par des aimants.

6. Procédé de fabrication d'une transmission (1) suivant l'une des revendications précédentes, des éléments (5) de refroidissement en mousse métallique à pore ouvert étant fixés au carter (2),
**caractérisé en ce que**
on prévoit une couche (6) intermédiaire, ayant une silicone et des particules conductrices thermiquement, entre des éléments (5) de refroidissement.

7. Procédé suivant la revendication 6, **caractérisé en ce qu'**on fixe les éléments (5) de refroidissement au moyen de vis et/ou de colles et/ou magnétiquement au carter (2).
